# EUROPÄISCHE PATENTANMELDUNG

(11) **EP 1 564 279 A1**
(43) Veröffentlichungstag der Anmeldung: **17.08.2005**
(21) Anmeldenummer: 05405188.3
(22) Anmeldetag: 11.02.2005
(51) Int. Cl.: C09K 17/40, E01C 13/08, A01G 1/00

(54) **Freilandbelag**

(30) Priorität: 13.02.2004 CH 2252004
(71) Anmelder: Isogreen S.A., 1705 Fribourg (CH)
(72) Erfinder: Baechler, Patrick, 1752 Villars-sur-Glâne (CH)
(74) Vertreter: AMMANN PATENTANWAELTE AG BERN

(57) **Zusammenfassung**

Ein Material zur Herstellung eines hochbelastbaren Freilandbelages, optional mit Grünwuchs, besteht zu mindestens 91 % aus Silikatsand, der einen maximalen Gehalt von 5 % Kalziumkarbonat aufweist. Eine weitere wesentliche bevorzugte Komponente sind Polypropylenfasern, bevorzugt mit einem Längengewicht von 2 - 40 dtex und einer Faserlänge von 15 - 40 mm. Der Anteil der Polypropylenfasern liegt dabei im Bereich von 0,4 - 0,7 %. Für begrünte Flächen wird der Mischung 0,1 - 1,0 % des Nährsubstrates und bis zu 2,3 % Rasensamen zugesetzt.

## Beschreibung

Gegenstand der vorliegenden Erfindung ist ein Material für das Erstellen von Freilandbelägen, insbesondere hoch belastbaren Rasenflächen.

Bekanntermassen werden Rasenflächen erstellt, indem ein Gelände zunächst mit einer geeigneten Topographie versehen wird. Darauf kommt eine geeignete Kombination von bodenbildendem Material, in das Rasen eingesät wird oder das bereits von vornherein mit Rasen versehen ist. Das bodenbildende Material muss dafür geeignet sein, dass Rasen darin wachsen kann.

Insbesondere auf Sportflächen, aber auch bei anderen Anwendungen, wird zusätzlich gefordert, dass die Fläche mechanisch belastbar ist, also hohem lokalen Druck ausgesetzt werden kann, ohne dass dadurch merkliche Vertiefungen oder andere Verformungen der Oberfläche eintreten. Auch der Bewuchs mit Rasen soll durch derartige Einwirkungen wenig beeinträchtigt werden.

Die gängigen Verfahren der Landschaftsgestaltung ergaben jedoch Oberflächen, die bei Belastungen wie sportliche Veranstaltungen oder Befahren mit Fahrzeugen lokal merklich verdichtet und/oder abgetragen werden. Daraus resultieren mit der Zeit zunehmende Unebenheiten und schlechteres Rasenwachstum.

Insbesondere sind gegenwärtig zwei Vorgehensweisen bekannt: Für einen langfristig guten Rasenwuchs bzw. eine weiche Oberfläche (Rennbahnen) wird die Oberschicht mit Erde ausgeführt. Dieser Belag ist jedoch nicht belastbar und wird schnell aufgewühlt oder, wenn er befahren wird, stark verdichtet. Im ersten Fall resultiert eine unebene, unregelmässige Oberfläche. Im zweiten Fall ergeben sich Spurrillen und andere Unebenheiten und die Wasseraufnahmefähigkeit und Luftdurchlässigkeit wird an dieser Stelle verringert, woraus ein schlechteres Pflanzenwachstum neben der unebenen Oberfläche resultiert.

Bei dem zweiten Verfahren wird die oberste Schicht mit Sand oder ähnlichem Material ausgeführt. Dabei wurde jedoch beobachtet, dass nach kurzer Zeit der Belag verhärtet, die Wasserdurchlässigkeit abnimmt und, sofern vorhanden, Pflanzen (Rasen) zunehmend schlechtes Wachstum aufweisen und schliesslich eingehen.

Aus der FR-A-2 835 258 ist ein Freilandbelag bekannt, der Kokosfasern als Fasernmaterial, ein poröses Material, namentlich Puzzolan, und ein körniges Material umfasst. Das körnige Material ist ein nicht auf Kalk basierender Sand, namentlich ein Flusssand, und liegt in einem Anteil von 75 - 80 % des Belagmaterials vor. 1 - 5 % stellen die Kokosfasern dar, das Puzzolan 15 - 25 %.

Kokosfasern weisen den Nachteil auf, dass sie zersetzt werden, insbesondere verlaufen.

Sande bestehen in der Regel aus verschiedenen Mineralien, wie Lehm, Granit, Kalk, Ton. Normaler Sand weist einen Silikatgehalt von höchstens 10 % und normalerweise nur bis zu 5 % auf. Auch hauptsächlich aus Silikat bestehende Sande (Silikatgehalt mind. 50 %) weisen einen gewissen Kalkgehalt auf, z.B. bis zu 32 %. Auch kalkarme Flusssande weisen noch einen gewissen Kalkgehalt auf. Der Korndurchmesser liegt im Bereich von 0 bis 2 mm (Klassierung O/2) mit nur einem geringen Anteil kleier als 0,05 mm.

Die dritte Hauptkomponente, das Puzzolan, besteht aus Lava und zerbricht bei Belastung, da es zu hart ist. Ausserdem zerbrechen die Teilchen bei Kälteeinwirkung.

Aus der EP-A-0,616,078 ist ebenfalls ein Material für Beläge für Sportanlagen u.ä. bekannt. Es besteht aus Silikatsand, wobei zur Erhöhung der Stabilität synthetische Fasern mit einer Länge von 5 bis 75 mm und einem Durchmesser von 50 bis 150 denier dienen (55 bis 167 dtex).

Es wird als allgemeine Charakteristik von Silikatsand angegeben, dass er kalkfrei ist. Da die bekannten Silikatsande, wie z.B. Flusssand, Kalk bis z.B. 12 % oder mehr aufweisen, ist Kalkfreiheit in diesem Zusammenhang als wenig Kalk enthaltend aufzufassen im Vergleich zu einem Sand, der nicht auf Silikat beruht. Angaben, dass die Kalkfreiheit eine besondere Bedeutung hat, werden nicht gemacht. Die relativ dicken Fasern weisen eine hohe Steifigkeit auf, wodurch die Scherfestigheit verringert wird.

Eine Aufgabe der vorliegenden Erfindung besteht daher darin, ein Material anzugeben, mit dem hochbelastbare Freilandbeläge angelegt werden können, die weniger zum Aushärten neigen.

Eine andere, bevorzugte zu lösende Aufgabe ist, ein solches Material anzugeben, das über längere Zeiträume Pflanzenwachstum gestattet.

Ein solches Material ist im Anspruch 1 angegeben. Die weiteren Ansprüche geben bevorzugte Ausführungsformen und Verwendungen an.

Demgemäss wird ein Material angegeben, dessen wesentliche Komponente hoch reiner Sand auf Silikatbasis darstellt. In einer bevorzugten Ausführungsform wird durch entsprechende Zusätze dafür gesorgt, dass Rasen in dem Material gute Wachstumsbedingungen vorfindet.

Die Erfindung basiert auf der Erkenntnis, dass Kalk, oder allgemein Komponenten (Calcium-Quellen), die unter Freilandbedingungen (Wasser, Kohlendioxid in freier Form oder als Anionen im Wasser [Karbonat, Hydrogenkarbonat]) Kalk bilden, durch diesen Vorgang Freilandbeläge aushärten. Aus dieser Erkenntnis heraus wurde ein Belagsmaterial gefunden, das sich durch einen höchstens geringen Kalziumkarbonatgehalt auszeichnet und auf hochreinem Silikatsand basiert.

Silikatsand der geforderten Kalkfreiheit wird in besonderen Sandgruben gefunden. Flussand erfüllt diese Anforderung nicht. Hochreiner Silikatsand (Quarzsand) mit mehr als 98 % SiO₂ wird auch Industriesand genannt.

Je nach Gegebenheiten, die z. B. eine regelmässige Pflege erfordern, kann jedoch ein Kalziumkarbonatgehalt bis 1 %, gegebenenfalls sogar bis 5 % zugelassen werden. Der Verhärtung kann dabei durch Vertikulieren entgegengewirkt werden, wodurch der Belag wieder aufgelockert wird. Dieser Kalkgehalt liegt deutlich unterhalb des maximalen Kalkgehaltes, den übliche Silikatsande aufweisen.

Die Erfindung soll weiter durch Ausführungsbeispiele erläutert werden. Prozentangaben sind in der ganzen Beschreibung wie auch in den Ansprüchen Gewichtsprozente soweit nicht anders angegeben.

Für einen erfindungsgemässen, hochbelastbaren Rasen wird Material gemäss folgender Zusammensetzung verwendet:
- Sand, Silikat ≥ 91 %
- Korngrösse ≤ 800 µm
- Gehalt an CaCO₃ ≤ 0,1 % (max. 0,5 %)
- PP-Fasern 0,4 - 0,7 %
- Faserlänge 15 - 40 mm
- Längengewicht 2 - 40 dtex
- Nährsubstrat 0,1 - 1,0 %
- Organische Masse (60 %)
- Hefepilze, Bakterien (38,5 %)
- NPK-Dünger (1,5 %) (Stickstoff, Phosphor, Kalium)
- Rasensamen ≤ 2,3 %

Insbesondere bewährt hat sich ein Substratanteil von mindestens 0,2 %.

Der Silikatsand und die Polypropylenfasern sind die Hauptkomponenten und bestimmen die Belastbarkeit des Produktes. Neben der Korngrösse hat sich insbesondere erwiesen, dass der Sand hochrein sein muss und insbesondere im Rahmen der technischen Möglichkeiten frei von Kalziumkarbonat ist. Als eine Obergrenze für Kalziumkarbonat kann dabei ein Gehalt von 5 % angesehen werden. Erfahrungsgemäss resultiert aus einem Kalziumkarbonatgehalt von ca. 5 % eine Aushärtung nach ca. 1 Jahr, so dass z. B. jährlich eine Vertikulierung erfolgen muss, um die vorteilhaften Eigenschaften aufrecht zu erhalten.

Mit einem weiter bevorzugten Maximalanteil an Kalziumkarbonat von 1 % erfolgt die Aushärtung erst nach ca. 2 Jahren, und bei Verwendung von hochreinem Sand mit einem Kalziumkarbonatanteil von höchstens 0,1 % bleiben die Eigenschaften des Belags über Jahre erhalten.

Die Kalziumkarbonatanteile beziehen sich dabei auf die einsatzfertige Mischung. Insbesondere ist dabei auch der Gehalt berücksichtigt, der gegebenenfalls über die anderen Komponenten, namentlich das Nährsubstrat, in die Mischung gelangen.

Ebenso zu berücksichtigen sind andere Kalziumionenquellen, wie Kalziumhydrogenkarbonat (CaHCO₃), Kalziumhydroxid (Ca(OH)₂) usw., die jeweils nach Umrechnung in die daraus unter Freilandbedingungen entstehende Mengen Kalziumkarbonat in den Kalziumkarbonatgehalt eingehen. Nicht berücksichtigt werden brauchen andererseits Kalziumverbindungen, die über längere Zeit inert sind und damit nicht wesentlich zur Verhärtung beitragen.

Die Korngrössenverteilung eines bewährten Sandes ist in folgender Tabelle aufgeführt:

### Granulometrie (Beispiel)

| Korngrösse | Gewichtsanteil |
|---|---|
| [µm] | [%] |
| 630 | 1,16 |
| 500 | 6,56 |
| 400 | 13,80 |
| 315 | 19,80 |
| 200 | 33,56 |
| 160 | 13,54 |
| 100 | 11,12 |
| < 100 | 0,46 |

Das Nährsubstrat ist bevorzugt ein flüssiges oder fliessfähiges Material mit zugesetzten bioorganischen Bestandteilen, z.B. das Produkt BIOPOST der Firma Dietrich Vittorelli, Norrköping, Schweden. Seine ungefähre Zusammensetzung ist in Klammern angegeben, da für das Nährsubstrat viele verschiedene Varianten in Frage kommen je nach den Anforderungen des Bewuchses und den klimatischen Verhältnissen. NPK-Dünger ist ein Dünger mit Stickstoff-, Phosphor- und Kaliumquellen, auch Volldünger genannt.

Ebenso wie das Nährsubstrat kann auch der Gehalt durch die Art des Rasensamens an die jeweiligen Verhältnisse vor Ort angepasst werden.

Eine Variante besteht aber auch darin, auf Nährsubstrat und Rasensamen zu verzichten. Diese Mischung kann eingesetzt werden, um unbegrünte, aber belastbare Flächen zu gestalten, z.B. Sportplätze (Pferde-Rennbahnen).

In einer besonders bevorzugten Ausführungsform beträgt der Gehalt an Polypropylenfasern 0,4 - 0,7 %. Die Mikrofasern sind durch eine Feinheit von 2,8 dtex und eine mittlere Länge von 28 mm gekennzeichnet. Die Mikrofasern bewirken eine Stabilisierung und eine Erhöhung der Festigkeit des Belages. Die Mikrofasern werden dabei als loses Material eingesetzt. Insbesondere werden keine Stücke von Gelegen, gewobenen Flächengebilden usw. verwendet.

Eine Mischung, die allen oben genannten bevorzugten Werten entspricht, ergab in einem Versuch einen Belag mit folgenden charakteristischen Werten für eine Schicht von 15 cm Dicke:
- Wasseraufnahmekapazität 60 l/m²
- Wasserrückhaltefähigkeit 20 l/m²
- Scherfestigkeit 246 N cm

Für eine rasenbedeckte Fläche kann folgender Aufbau angewendet werden: Auf den gewachsenen Boden wird zunächst eine Schotterschicht aufgebracht. Sie wirkt als entwässerndes Grundnetz, das sich den Eigenschaften des Bodens und den örtlichen Gegebenheiten anpasst. Der obere Bereich der Schotterschicht wirkt als entwässernde und filtrierende Mittelschicht. Darüber folgt die Schicht aus dem erfindungsgemässen Material. Auf seiner Oberfläche bildet sich durch natürlichen Wuchs die Rasenfläche, sofern Grassamen und Nährsubstrat wenigstens in der obersten Schicht im Material enthalten sind. Die Abfolge der Schichten kann jedoch auch anders gewählt werden, bevorzugt bildet jedoch die Schicht aus erfindungsgemässem Material die oberste Bodenschicht. Das Aufbringen erfolgt auf eine der bekannten Arten, am Einfachsten durch Verteilen und Walzen und/oder Stampfen. Eine weitere Variante besteht darin, eine Bodenbedeckung ohne Bewuchs fertigzustellen und darauf Fertigrasen mit Hilfe von Rasenziegeln oder -rollen aufzubringen.

In jedem Fall ergibt sich eine hochbelastbare Fläche, die sich für Sportereignisse aller Art bewährt hat und z.B. auch Pferdehufen und Stollen an Sportschuhen standhält. Auch das Befahren mit Fahrzeuge wie z.B. auf Camping- oder Parkplatzflächen ist ohne Weiteres zulässig. Bemerkenswert ist dabei die grossflächige Wasserdurchlässigkeit und das Wasseraufnahmevermögen, das der Bildung von Pfützen entgegenwirkt und gleichzeitig, wenn Rasenbewuchs vorliegt, den Pflanzen die nötige Wasserversorgung gewährleistet.

Die hohe Porosität gestattet aber auch den Luftzutritt und Wachstumsmöglichkeiten für die Pflanzenwurzeln. Diese Eigenschaften blieben selbst bei Belastungen bis 40 t/m² erhalten.

Eine grossflächig mit Rasen bewachsene, aber dennoch z.B. Parkplatz dienende Fläche ist dabei nicht nur ökologisch vorteilhaft, sondern auch für die Benutzer attraktiv.

Bei merklichen Anteilen an Kalziumkarbonat oder äquivalenten, karbonatbildenden Kalziumverbindungen ist es, wie oben erwähnt, angebracht, einer über längere Zeitspannen auftretenden Verhärtung durch Vertikulieren, d. h. Aufbrechen der Oberfläche, entgegenwirken. Dazu können die an sich bekannten Vertikuliergeräte eingesetzt werden, so dass sich eine Beschreibung erübrigt. Bei dem Vertikulieren kann bevorzugt noch reiner Silikatsand, insbesondere Quarzsand, eingearbeitet werden, wodurch der zusätzliche positive Effekt erzielt wird, dass der Kalziumkarbonatgehalt sinkt. Der zugesetzte Sand ist natürlich kalziumkarbonatfrei oder wenigstens deutlich kalziumkarbonatärmer - wobei auch hier alternative Kalziumquellen zu berücksichtigen sind.

Aus der vorangehenden Beschreibung sind dem Fachmann viele Abwandlungen der Erfindung zugänglich, ohne den Schutzbereich der Erfindung zu verlassen, der in den Ansprüchen definiert ist.

Eine denkbare Variante ist die Verwendung kürzerer PP-Fasern, z. B. von ca. 1000 Mikrometer Länge, wodurch schneller eine hohe Festigkeit eintritt. Denkbar ist auch, anstelle von Polypropylenfasern andere synthetische Mikrofasern zu verwenden.

## Patentansprüche

1. Material zur Herstellung eines mechanisch belastbaren Freilandbelages, **dadurch gekennzeichnet, dass** es im Wesentlichen aus Silikatsand besteht und der Gehalt an Kalziumkarbonat-bildenden Kalziumquellen, insbesondere Kalziumkarbonat, höchstens 5 % beträgt.

2. Material gemäss Anspruch 1, **dadurch gekennzeichnet, dass** der Anteil an Kalziumquellen höchstens 1 % beträgt.

3. Material gemäss Anspruch 2, **dadurch gekennzeichnet, dass** der Anteil an Kalziumquellen höchstens 0,1 % beträgt.

4. Material gemäss einem der Ansprüche 1 bis 3, **dadurch gekennzeichnet, dass** der Silikatsand im Wesentlichen frei ist von anorganischen Beimengungen.

5. Material gemäss einem der Ansprüche 1 bis 4, **dadurch gekennzeichnet, dass** der Gehalt an Silikatsand mindestens 91 %, bevorzugt mind. 95 % und besonders bevorzugt mind. 95,9 % beträgt.

6. Material gemäss einem der Ansprüche 1 bis 5, **dadurch gekennzeichnet, dass** es höchstens 1 %, bevorzugt 0,4 - 0,7 %, an synthetischen Mikrofasern, bevorzugt Polypropylenfasern, von 2 bis 40 dtex enthält.

7. Material gemäss Anspruch 6, **dadurch gekennzeichnet, dass** die Fasern eine Länge von höchstens 40 mm aufweisen.

8. Material gemäss Anspruch 7, **dadurch gekennzeichnet, dass** die Länge der Mikrofasern im Wesentlichen im Bereich von 15 bis 40 mm liegt.

9. Material gemäss einem der Ansprüche 1 - 8, **dadurch gekennzeichnet, dass** es 0,1 - 1,0 % bevorzugt mindestens 0,2 % eines Nährsubstrates und höchstens 2,3 % Rasensamen enthält.

10. Material gemäss Anspruch 9, **dadurch gekennzeichnet, dass** das Nährsubstrat eine Zusammensetzung aus
- organischer Masse, insbesondere pflanzlicher Masse,
- biologischer Masse wie Hefe, Bakterien, und
- Stickstoff-Phosphor-Kaliumdünger
ist.

11. Verwendung des Materials gemäss einem der vorangehenden Ansprüche zur Herstellung von hochbelastbaren Sportflächen und befahrbaren Flächen, wobei die Fläche begrünt oder unbegrünt ist.
